# EUROPEAN PATENT APPLICATION

(11) **EP 4 822 950 A1**
(43) Date of publication of application: **14.10.2026**
(21) Application number: 26166871.9
(22) Date of filing: 23.03.2026
(51) Int. Cl.: H02K 1/2733, H02K 5/12, H02K 5/24, H02K 7/04, H02K 7/14, H02K 15/121

(54) **MOTOR, AND METHOD FOR MANUFACTURING MOTOR**

(30) Priority: 08.04.2025 CN 202510431451; 08.04.2025 CN 202520646286 U
(71) Applicant: Delta Electronics, Inc., Taoyuan City 33341 (TW)
(72) Inventor: WANG, Yong-Cheng, Taoyuan City (TW); CHEN, Meng-Yu, Taoyuan City (TW); HUANG, Shih-Han, Taoyuan City (TW)
(74) Representative: 2K Patent Partnerschaft mbB

(57) **Abstract**

A motor is provided. The motor includes a rotor, and an impeller. The rotor includes a rotor top surface, a rotor bottom surface, and at least two rotor bumps. The at least two rotor bumps are formed on the rotor bottom surface. The impeller is coupled to the rotor and located above the rotor top surface. The at least two rotor bumps have different shapes.

## Description

### CROSS REFERENCE TO RELATED APPLICATIONS

This Application claims priority of China Patent Application No. 202510431451.9, filed on April 08, 2025, and China Patent Application No. 202520646286.4, filed on April 08, 2025, the entirety of which are incorporated by reference herein.

### BACKGROUND OF THE INVENTION

### Field of the Invention

The present invention relates to a motor and a method for manufacturing the motor, and in particular to a motor with a rotor bump and a method for manufacturing the motor with a rotor bump.

### Description of the Related Art

During the operation of the motor, uneven weight of the motor rotor is one of the common problems, especially when the motor rotor is running at high speed, it is more likely to cause vibration. This vibration will not only reduce the running stability of the motor, but may also accelerate the wear of bearings and other components, thereby shortening the life of the motor. In addition, in order to reduce vibration, the existing motor design may cause fluid turbulence problems.

Therefore, a motor i that may improve operating stability and reduce vibration is desired.

### BRIEF SUMMARY OF THE INVENTION

An embodiment of the present invention provides a motor. The motor includes a rotor, and an impeller. The rotor includes a rotor top surface, a rotor bottom surface, and at least two rotor bumps. The at least two rotor bumps are formed on the rotor bottom surface. The impeller is coupled to the rotor and located above the rotor top surface. The at least two rotor bumps have different shapes.

In some embodiments, the at least two rotor bumps are symmetrically arranged about a central axis of the rotor. In some embodiments, the at least two rotor bumps have different heights. In some embodiments, the rotor further includes a rotor core, and the at least two rotor bumps and the rotor core are made of the same material. In some embodiments, the rotor further includes a rotor housing, and the rotor housing and the rotor core are made of different materials. In some embodiments, the impeller includes an impeller cover plate, and the periphery of the impeller cover plate has at least one recessed portion or a protruding portion. In some embodiments, the impeller cover plate is an impeller top cover or an impeller bottom plate.

An embodiment of the present invention provides a motor. The motor includes a rotor, and an impeller. The rotor includes a rotor top surface, a rotor bottom surface, and a rotor bump. The rotor bump is formed on the rotor bottom surface. The impeller is coupled to the rotor and located above the rotor top surface. An outer edge of an impeller cover plate of the impeller has a non-uniform thickness.

In some embodiments, there are at least two rotor bumps, and the at least two rotor bumps have different shapes or roughnesses. In some embodiments, an impeller periphery of the impeller is composed of a first outer edge and a second outer edge of different thicknesses. In some embodiments, the at least two rotor bumps are symmetrically arranged about a central axis of the rotor. In some embodiments, the impeller cover plate is an impeller top cover or an impeller bottom plate. In some embodiments, the rotor further includes a rotor core, and the rotor bump and the rotor core are made of the same material. In some embodiments, the rotor bump is integrally formed with the rotor core.

An embodiment of the present invention provides a method for manufacturing a motor, including: forming a first rotor bump on a rotor bottom surface of a rotor; coupling an impeller to the rotor; and forming a second rotor bump on the rotor bottom surface of the rotor. The first rotor bump and the second rotor bump have different shapes.

In some embodiments, the motor manufacturing further includes: forming a first part and a second part on an outer edge of an impeller cover plate of an impeller. In some embodiments, the motor manufacturing further includes: forming a rotor housing by plastic injection molding on a rotor core of the rotor. The rotor housing and the rotor core are made of different materials. In some embodiments, the first rotor bump and the second rotor bump extend away from the rotor bottom surface. In some embodiments, the first rotor bump, the second rotor bump and a rotor core of the rotor are made of the same material. In some embodiments, the impeller cover plate is an impeller top cover or an impeller bottom plate.

### BRIEF DESCRIPTION OF THE DRAWINGS

The present invention may be more fully understood by reading the subsequent detailed description and examples with references made to the accompanying drawings, wherein:
FIG. 1 is a schematic view of a motor according to some embodiments of the present disclosure.
FIG. 2 is a bottom schematic view of a rotor according to some embodiments of the present disclosure.
FIG. 3 is a bottom schematic view of a rotor according to some embodiments of the present disclosure, wherein a rotor housing of the rotor is omitted.
FIG. 4 is a schematic view of a motor according to some embodiments of the present disclosure.
FIG. 5 is a top schematic view of an impeller according to some embodiments of the present disclosure.
FIG. 6 is a bottom schematic view of an impeller according to some embodiments of the present disclosure.
FIG. 7 is a bottom schematic view of a motor according to some embodiments of the present disclosure, wherein the removed parts are indicated by shadows.
FIG. 8 is a schematic view of a rotor core and a rotor magnet according to some embodiments of the present disclosure, wherein dotted circles are used to emphasize their positioning structures.
FIG. 9 is a schematic view of a rotor core and a rotor housing according to some embodiments of the present disclosure, wherein dotted circles are used to emphasize their positioning structures.
FIG. 10 is a schematic view of a rotor and an impeller according to some embodiments of the present disclosure, wherein dotted circles are used to emphasize their positioning structures.
FIG. 11 is a schematic view of a motor manufacturing method according to some embodiments of the present disclosure.

### DETAILED DESCRIPTION OF THE INVENTION

The present disclosure may be more clearly understood by referring to the following description and the appended drawings. It should be noted that, for the sake of the simplicity of the drawings and comprehensibility for readers, only a portion of the light-emitting unit is illustrated in multiple figures in the present disclosure, and the specific components in the figures are not drawn to scale. In addition, the number and size of each component in the drawings merely serve as an example, and are not intended to limit the scope of the present disclosure. Furthermore, similar and/or corresponding numerals may be used in different embodiments for describing some embodiments simply and clearly, but they do not represent any relationship between different embodiments and/or structures discussed below.

Certain terms may be used throughout the present disclosure and the appended claims to refer to particular elements. Those skilled in the art will understand that electronic device manufacturers may refer to the same components by different names. The present specification is not intended to distinguish between components that have the same function but different names. In the following specification and claims, the words "including", "comprising", "having" and the like are open-ended words, so they should be interpreted as meaning "including but not limited to ..." Therefore, when the terms "including", "comprising", and/or "having" are used in the description of the disclosure, the presence of corresponding features, regions, steps, operations and/or components is specified without excluding the presence of one or more other features, regions, steps, operations and/or components.

In addition, in this specification, relative expressions may be used. For example, "lower", "bottom", "higher" or "top" are used to describe the position of one element relative to another. It should be noted that if a device is flipped upside down, an element that is "lower" will become an element that is "higher".

When a corresponding component (i.e. a film layer or region) is referred to as "on another component", it may be directly on another component, or there may be other components in between. On the other hand, when a component is referred "directly on another component", there is no component between the former two. In addition, when a component is referred "on another component", the two components have an up-down relationship in the top view, and this component can be above or below the other component, and this up-down relationship depends on the orientation of the device.

The terms "about,", "essentially," or "substantially" are generally interpreted as within 20% of a given value or range, or as interpreted as within 10%, 5%, 3%, 2%, 1%, or 0.5% of a given value or range.

In the present application, when mentioning that the A element overlaps the B element, it means to include at least partial overlap.

It should be understood that, although the terms "first", "second" etc. may be used herein to describe various elements, layers and/or portions, and these elements, layers, and/or portions should not be limited by these terms. These terms are only used to distinguish one element, layer, or portion. Thus, a first element, layer or portion discussed below could be termed a second element, layer or portion without departing from the teachings of some embodiments of the present disclosure. In addition, for the sake of brevity, terms such as "first" and "second" may not be used in the description to distinguish different elements. As long as it does not depart from the scope defined by the appended claims, the first element and/or the second element described in the appended claims can be interpreted as any element that meets the description in the specification.

In the present disclosure, the thickness, length, and width can be measured by using an optical microscope, and the thickness can be measured by the cross-sectional image in the electron microscope, but it is not limited thereto. In addition, a certain error may be present in a comparison with any two values or directions. If the first direction is perpendicular to the second direction, the angle between the first direction and the second direction may be between 80 degrees (≥ 80 degrees) and 100 degrees (≤ 100 degrees). If the first direction is parallel to the second direction, the angle between the first direction and the second direction may be between 0 degree (≥ 0 degree) and 10 degrees (≤ 10 degrees).

It should be noted that the technical solutions provided by different embodiments below may be interchangeable, combined or mixed to form another embodiment without departing from the spirit of the present disclosure.

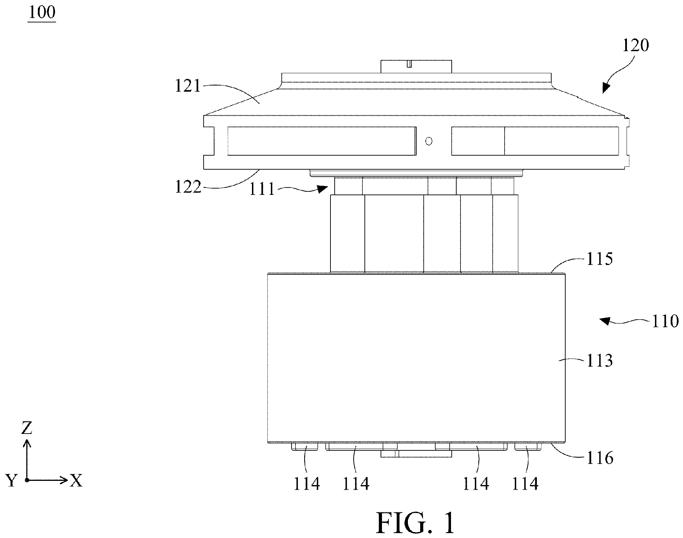

Please refer to FIG. 1, FIG. 1 is a schematic view of a motor 100 according to some embodiments of the present disclosure.

As shown in FIG. 1, the motor 100 includes a rotor 110 and an impeller 120. The impeller 120 is coupled to the rotor 110, and the impeller 120 may be coaxial with the rotor 110 to improve the stability of the motor 100 during operation and reduce vibration of the motor 100. The rotor 110 may be driven via electricity (electromagnetic), thereby driving the impeller 120, and the impeller 120 may drive the surrounding fluid.

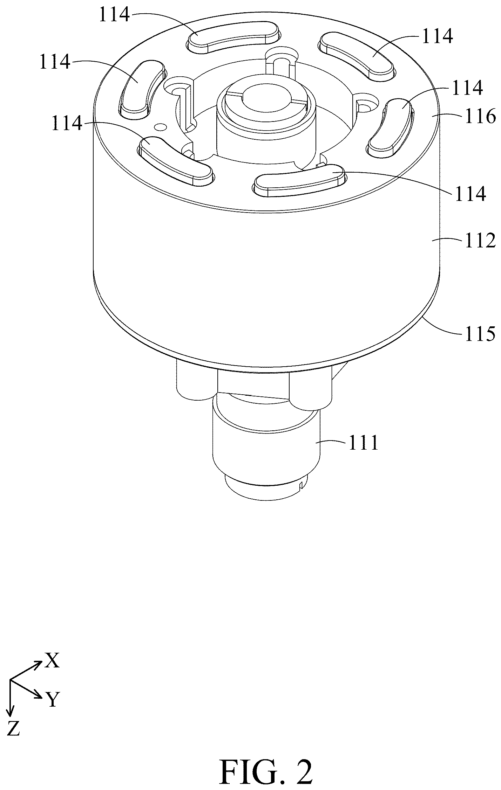

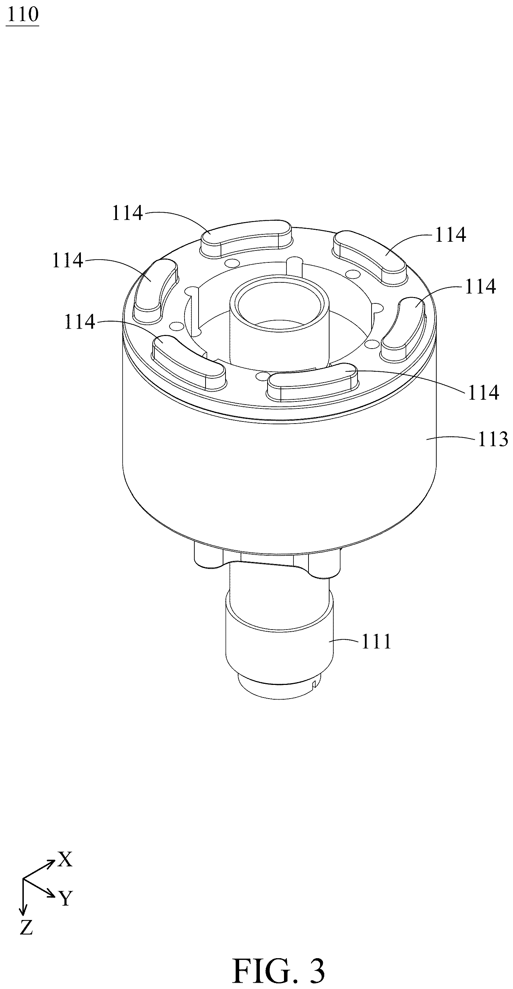

Please refer to FIG. 2 and FIG. 3. FIG. 2 is a bottom schematic view of the rotor 110 according to some embodiments of the present disclosure. FIG. 3 is a bottom schematic view of the rotor 110 according to some embodiments of the present disclosure, wherein a rotor housing 113 of the rotor 110 is omitted.

As shown in FIG. 2 and FIG. 3, the rotor 110 includes a rotor core 111, a rotor magnet 112, a rotor housing 113, and a rotor bump 114.

The rotor core 111 has a magnetically conductive property. For example, the rotor core 111 may include metal. For example, the rotor core 111 may include magnetically conductive stainless steel (e.g., SUS 430 or SUS 420J2), or silicon steel, etc. It should be noted that the materials shown here are only examples; in fact, the rotor core 111 may also include any suitable material.

The rotor magnet 112 is disposed around the rotor core 111; for example, the rotor magnet 112 may surround the rotor core 111. In the embodiment of FIG. 3, the rotor magnet 112 has a ring shape, such that the rotor magnet 112 completely surrounds the rotor core 111.

The rotor housing 113 covers the rotor core 111 and the rotor magnet 112. In one embodiment, the rotor housing 113 may include a different material than the rotor core 111. For example, the rotor housing 113 may include plastic. For example, the rotor housing 113 may be formed on the rotor core 111 and the rotor magnet 112 by plastic injection molding. As a result, the rotor housing 113 is connected to the rotor core 111 and the rotor magnet 112 without using any connecting elements such as glue.

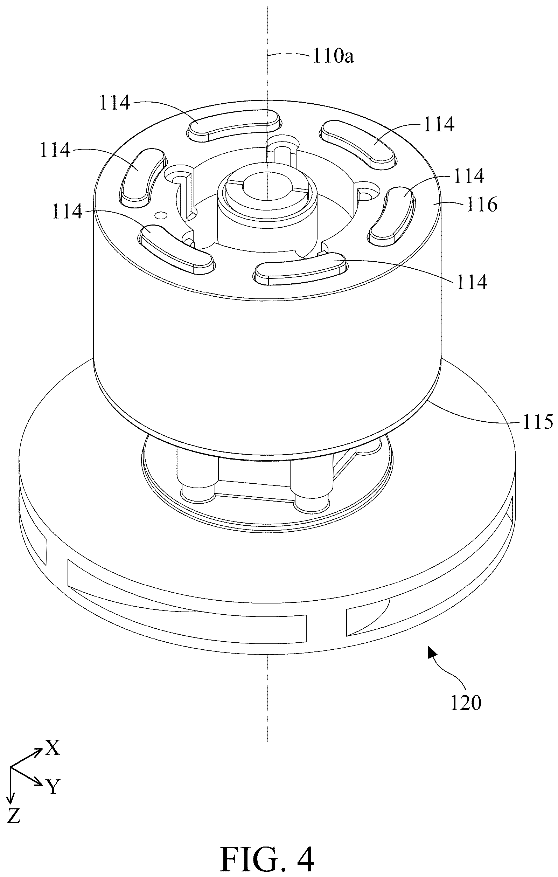

Please refer to FIG. 1 and FIG. 4 at the same time. FIG. 4 is a schematic view of the motor 100 according to some embodiments of the present disclosure.

The rotor 110 further includes a rotor top surface 115 and a rotor bottom surface 116. The rotor top surface 115 and a rotor bottom surface 116 are opposite to each other. The rotor top surface 115 faces toward the impeller 120, while the rotor bottom surface 116 faces away from the impeller 120.

The impeller 120 is located above the rotor top surface 115; whereas the rotor bump 114 is formed on the rotor bottom surface 116, and the rotor bump 114 extends away from the rotor bottom surface 116.

According to some embodiments of the present disclosure, there are at least two rotor bumps 114. According to some embodiments of the present disclosure, the at least two rotor bumps 114 are symmetrically disposed about a central axis 110a of the rotor 110. For example, FIG. 4 shows six rotor bumps 114, and the six rotor bumps 114 are symmetrically and evenly arranged about the central axis 110a of the rotor 110.

The at least two rotor bumps 114 and the rotor core 111 are made of the same material. Furthermore, according to some embodiments of the present disclosure, the at least two rotor bumps 114 and the rotor core 111 may be integrally formed.

The at least two rotor bumps 114 have different shapes. For example, the at least two rotor bumps 114 have different shapes or sizes. For example, the at least two rotor bumps 114 may have different heights or roughnesses.

The shape of the rotor bump 114 may be achieved by removing a portion of the rotor bump 114. For example, a portion of the rotor bump 114 may be removed by milling, turning, drilling, grinding, etc. In this way, the shape, height, or roughness of the rotor bump 114 may be modified to change the weight of the rotor bump 114.

In this way, the stability of the motor 100 during operation may be improved and the vibration of the motor 100 may be reduced. Furthermore, it is possible to avoid disturbing the fluid around the impeller 120 and reduce the turbulence of the fluid.

According to some embodiments of the present disclosure, the rotor bump 114 and the rotor core 111 are made of different materials. Furthermore, according to some embodiments of the present disclosure, the rotor bump 114 and the rotor core 111 may not be integrally formed. For example, the rotor bumps 114 having a material different from that of the rotor core 111 may be attached to the rotor core 111, so that the rotor bumps 114 have different shapes, heights, or roughnesses.

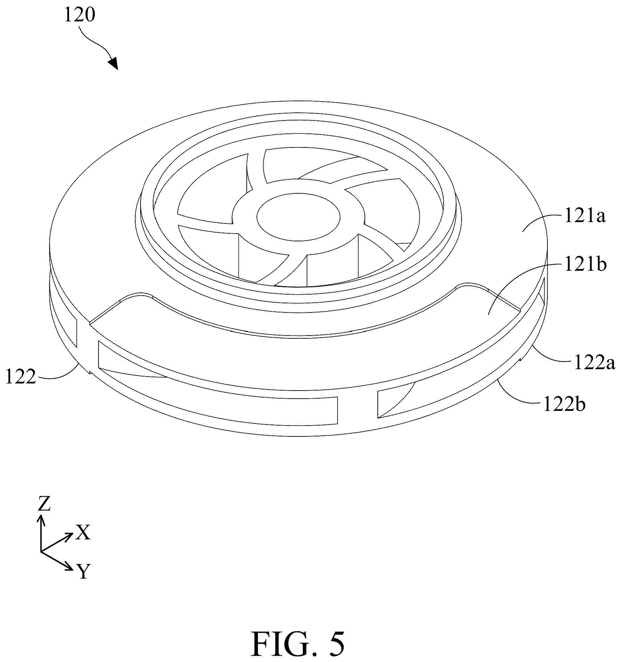

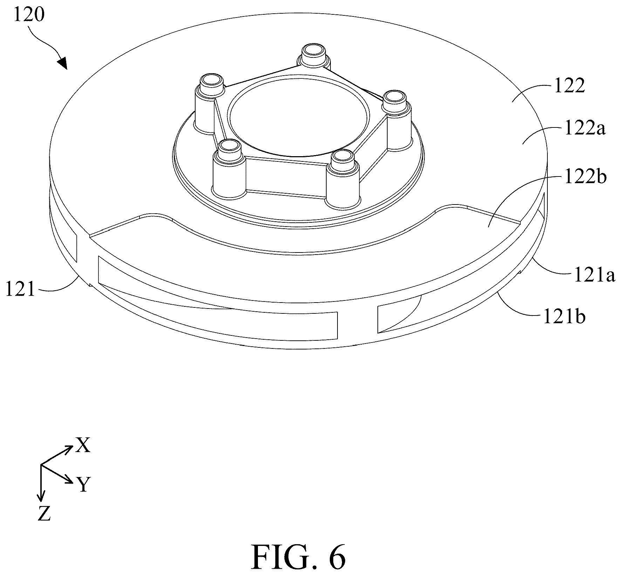

Please refer to FIG. 5 and FIG. 6. FIG. 5 is a top schematic view of the impeller 120 according to some embodiments of the present disclosure. FIG. 6 is a bottom schematic view of the impeller 120 according to some embodiments of the present disclosure.

The impeller 120 is composed of an impeller cover plate and blades that are connected to the impeller cover plate. The impeller cover plate includes an impeller top cover 121 and an impeller bottom plate 122. The periphery of the impeller cover plate is the outer edge of the impeller top cover 121 or the outer edge of the impeller bottom plate 122. The outer edge of the impeller top cover 121 may include a first part 121a and a second part 121b. The second part 121b is recessed or protruded relative to the first part 121a so that the thickness of the second part 121b is different from the thickness of the first part 121a (e.g., the thickness of the second part 121b is smaller than the thickness of the first part 121a). That is, the outer edge of the impeller top cover 121 has at least one recessed portion or a protruding portion, so that the thickness of the outer edge of the impeller top cover 121 is uneven.

The second part 121b may be formed by removing a portion of the outer edge of the impeller top cover 121. Similarly, a portion of the outer edge of the impeller top cover 121 may be removed by milling, turning, drilling, grinding, or the like. In this way, the shape, height, or roughness of the second part 121b may be modified to change the weight of the impeller 120.

In this way, the stability of the motor 100 during operation may be improved and the vibration of the motor 100 may be reduced.

The outer edge of the impeller bottom plate 122 may include a first part 122a and a second part 122b. The second part 122b is recessed relative to the first part 122a such that the thickness of the second part 122b is different from the thickness of the first part 122a (e.g., the thickness of the second part 122b is less than the thickness of the first part 122a). That is, the outer edge of the impeller bottom plate 122 has at least one recessed portion or a protruding portion, so that the thickness of the outer edge of the impeller bottom plate 122 is uneven.

The second part 122b may be formed by removing a portion of the outer edge of the impeller bottom plate 122. Similarly, a portion of the outer edge of the impeller bottom plate 122 may be removed by milling, turning, drilling, grinding, or the like. In this way, the shape, height, or roughness of the second part 122b may be modified to change the weight of the impeller 120.

In this way, the stability of the motor 100 during operation may be improved and the vibration of the motor 100 may be reduced. Furthermore, disturbance of the fluid at the front end of the impeller 120 (around the impeller top cover 121) may be avoided, thereby reducing the turbulence of the fluid.

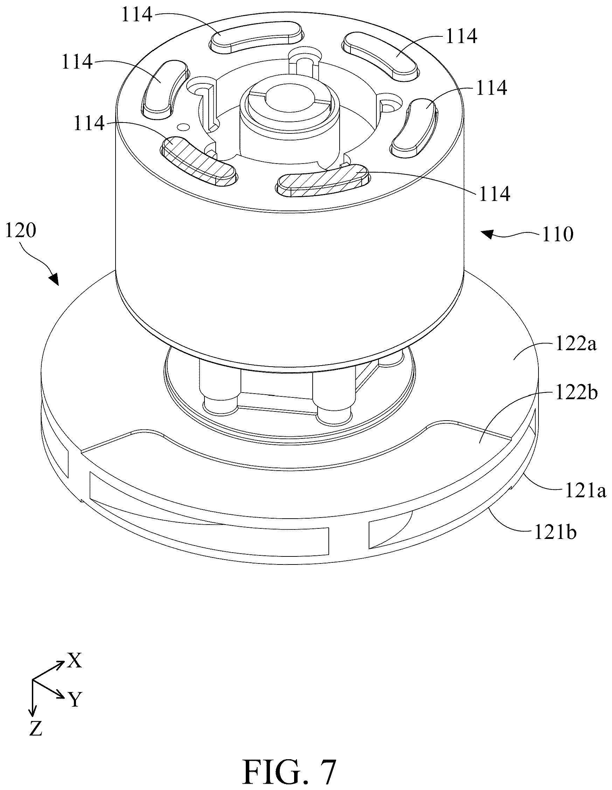

Please refer to FIG. 7, FIG. 7 is a bottom schematic view of the motor 100 according to some embodiments of the present disclosure, wherein the removed portions are indicated by shadows.

In the embodiment of FIG. 7, a portion of two rotor bumps 114 (shown by shadows) is removed, so that the shape, height, or roughness of these two rotor bumps 114 (shown by shading) is different from the shape, height, or roughness of the other rotor bumps 114. It should be noted that the number of rotor bumps 114 with removed portions is merely an example, and any number of rotor bumps 114 with removed portions may be provided.

Furthermore, a portion of the second part 122b of the outer edge of the impeller bottom plate 122 is removed, so that the thickness of the outer edge of the impeller bottom plate 122 is uneven, and the thickness of the second part 122b is different from the thickness of the first part 122a (the thickness of the second part 122b is smaller than the thickness of the first part 122a).

In this way, the stability of the motor 100 during operation may be improved and the vibration of the motor 100 may be reduced. Furthermore, disturbance of the fluid at the front end of the impeller 120 (around the impeller top cover 121) may be avoided, thereby reducing the turbulence of the fluid.

According to some embodiments of the present disclosure, at least a portion of the rotor bump 114 is removed, and a portion of the outer edge of the impeller top cover 121 is removed.

According to some embodiments of the present disclosure, a portion of the outer edge of the impeller top cover 121 is removed, and a portion of the outer edge of the impeller bottom plate 122 is removed.

According to some embodiments of the present disclosure, at least a portion of the rotor bump 114 is removed, a portion of the outer edge of the impeller top cover 121 is removed, and a portion of the outer edge of the impeller bottom plate 122 is removed.

According to some embodiments of the present disclosure, only a portion of the outer edge of the impeller top cover 121 is removed.

According to some embodiments of the present disclosure, only a portion of the outer edge of the impeller bottom plate 122 is removed.

According to some embodiments of the present disclosure, only a portion of at least one rotor bump 114 is removed.

In this way, the stability of the motor 100 during operation may be improved and the vibration of the motor 100 may be reduced.

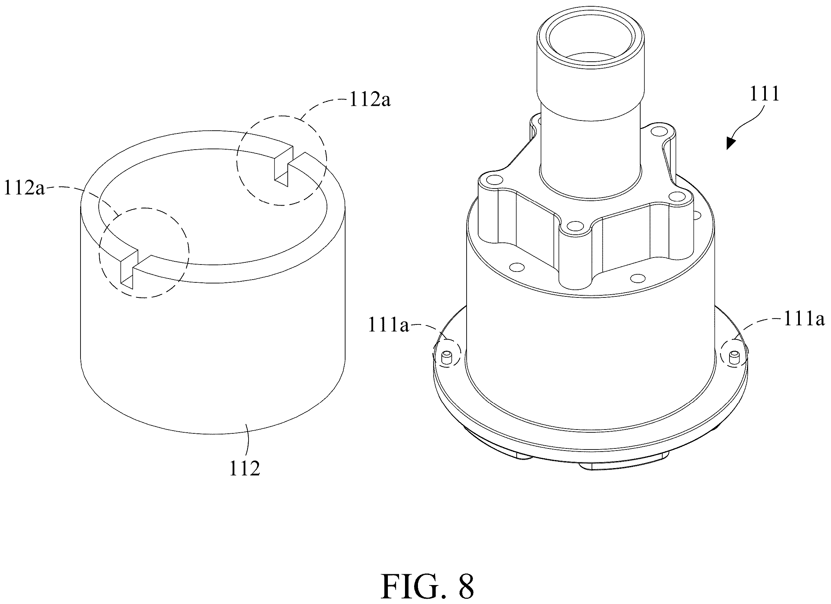

Please refer to FIG. 8, FIG. 8 is a schematic view of a rotor core 111 and a rotor magnet 112 according to some embodiments of the present disclosure, wherein dotted circles are used to emphasize their positioning structures.

As shown in FIG. 8, the rotor core 111 includes a positioning structure 111a, and the rotor magnet 112 includes a positioning structure 112a. The positioning structure 111a of the rotor core 111 may be a protrusion structure, which corresponds to the positioning structure 112a of the rotor magnet 112. The positioning structure 112a of the rotor magnet 112 may be a groove structure, so that the positioning structure 111a of the rotor core 111 may be accommodated therein and the movement of the positioning structure 111a of the rotor core 111 may be limited to avoid unwanted rotation between the rotor core 111 and the rotor magnet 112.

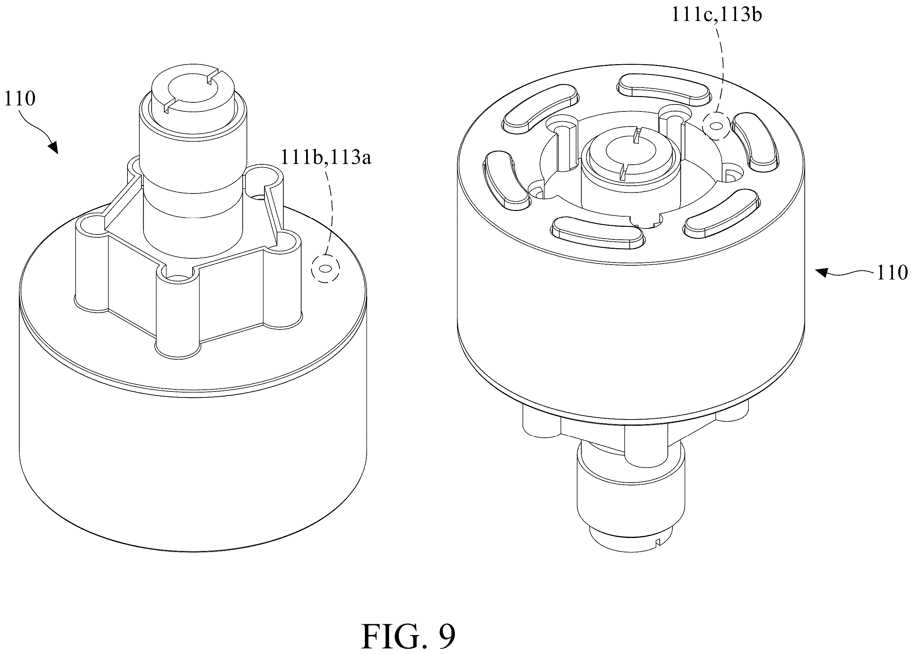

Please refer to FIG. 9, FIG. 9 is a schematic view of the rotor core 111 and the rotor housing 113 according to some embodiments of the present disclosure, wherein dotted circles are used to emphasize their positioning structures.

As shown in FIG. 8, the rotor core 111 includes a positioning structure 111b and a positioning structure 111c. The positioning structure 111b is formed on the rotor top surface 115, and the positioning structure 111c is formed on the rotor bottom surface 116. The rotor housing 113 includes a positioning structure 113a and a positioning structure 113b. The positioning structure 113a corresponds to the positioning structure 111b, and the positioning structure 113b corresponds to the positioning structure 111c. In this way, it is helpful to position and combine the rotor core 111 and the rotor housing 113.

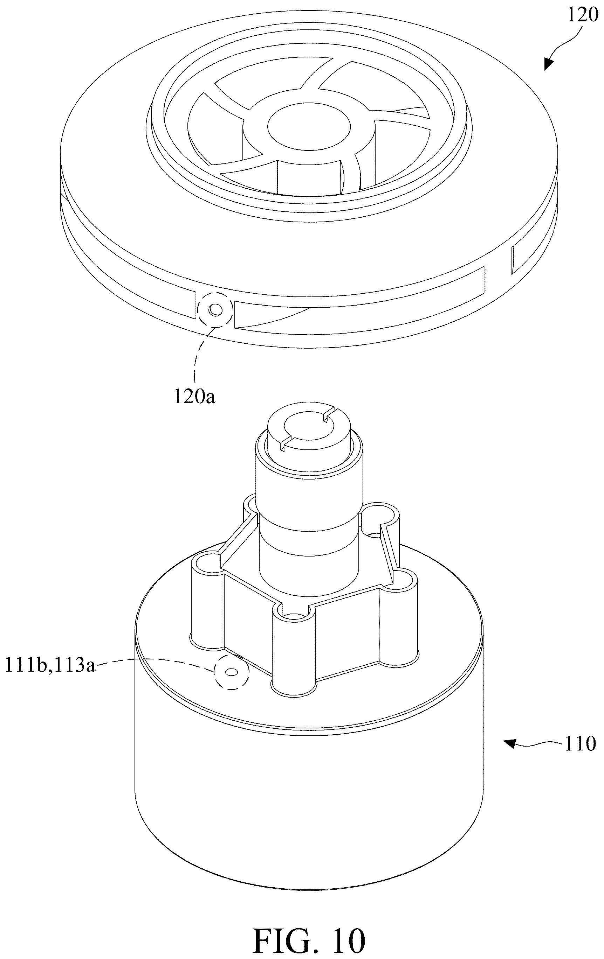

Please refer to FIG. 10, FIG. 10 is a schematic view of the rotor 110 and the impeller 120 according to some embodiments of the present disclosure, wherein dotted circles are used to emphasize their positioning structures.

As shown in FIG. 10, the impeller 120 includes a positioning structure 120a. The positioning structure 120a corresponds to the positioning structure 111b and the positioning structure 113a. In this way, it is helpful to position and combine the rotor core 111 and the rotor housing 113.

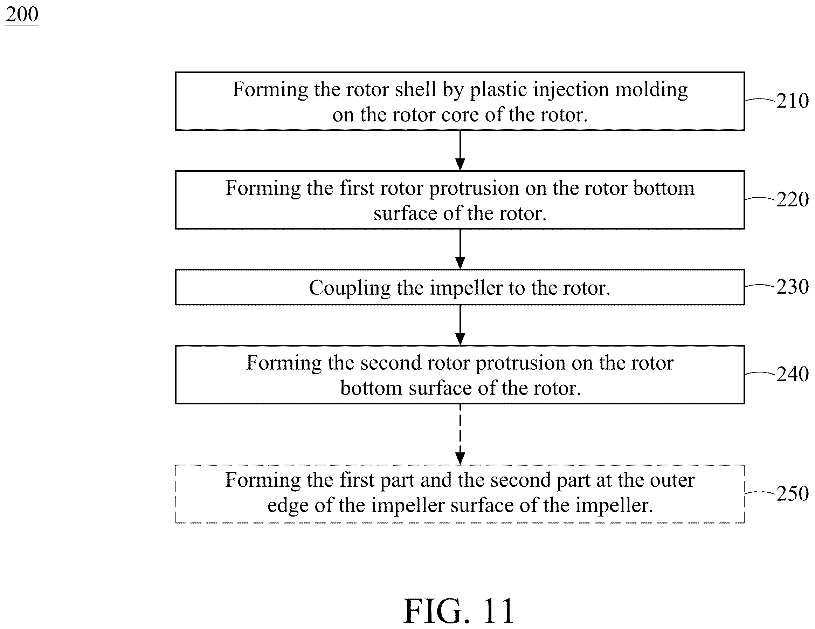

Please refer to FIG. 11, FIG. 11 is a schematic view of a motor manufacturing method 200 according to some embodiments of the present disclosure.

It should be noted that the elements in the motor manufacturing method 200 may correspond to the elements in the motor 100, and the similarities are not repeated here.

In step 210, forming a rotor housing by plastic injection molding on a rotor core of the rotor. The rotor core has a magnetically conductive property, for example, the rotor core may include metal. The rotor housing may comprise a different material than the rotor core. For example, the rotor housing may comprise plastic. The rotor may be the aforementioned rotor 110, the rotor core may be the aforementioned rotor core 111, and the rotor housing may be the aforementioned rotor housing 113.

In step 220, forming a first rotor bump on a rotor bottom surface of the rotor. The rotor bottom surface faces away from the impeller. The first rotor bump is formed on the rotor bottom surface, and the first rotor bump extends away from the rotor bottom surface. The rotor bottom surface may be the aforementioned rotor bottom surface 116, the first rotor bump may be one of the aforementioned first rotor bumps 114, and the impeller may be the aforementioned impeller 120. The number of the first rotor bump may be one or more.

In step 230, coupling an impeller to the rotor. The impeller and the rotor may be coaxial (e.g., central axis 110a).

In step 240, forming a second rotor bump on the rotor bottom surface of the rotor. The second rotor bump is formed on the rotor bottom surface, and the second rotor bump extends away from the rotor bottom surface. The first rotor bump, the second rotor bump and the rotor core may be made of the same material. The first rotor bump and the second rotor bump are preferably arranged symmetrically with respect to the central axis of the rotor, and the first rotor bump and the second rotor bump have different shapes, heights, or roughnesses. The second rotor bump may be another one of the aforementioned first rotor bumps 114. In addition, when the number of the first rotor bumps is plural, the second rotor bumps may be formed by modifying at least one of the aforementioned first rotor bumps.

Step 250 is optional. In some embodiments of the present disclosure, step 250 is performed, that is, the motor manufacturing method 200 includes step 210, step 220, step 230, step 240, and step 250. However, in some embodiments of the present disclosure, step 250 may not be performed, that is, the motor manufacturing method 200 only includes step 210, step 220, step 230, and step 240, but does not include step 250.

In step 250, forming a first part and a second part on an outer edge of an impeller cover plate of an impeller. The first thickness of the first part and the second thickness of the second part are different, so that the outer edge of the impeller cover plate has at least one recessed portion or a protruding portion, and the thickness of the outer edge of the cover plate is uneven. For example, in one embodiment, a periphery of an impeller cover plate of an impeller is composed of a first outer edge and a second outer edge with different thicknesses. The impeller cover plate may be at least one of an impeller top cover and an impeller bottom plate, such that the thickness of the outer edge of the impeller cover plate is non-uniform. The impeller top cover may be the aforementioned impeller top cover 121, and the impeller bottom plate may be the aforementioned impeller bottom plate 122.

In general, the motor and the motor manufacturing method of the disclosed embodiments may effectively improve the stability of the motor during operation and reduce the vibration of the motor. Furthermore, the motor and the motor manufacturing method of the disclosed embodiment may avoid disturbing the fluid, thereby reducing the turbulence of the fluid. Furthermore, the motor and the motor manufacturing method of the disclosed embodiments may facilitate the positioning and combining of the components of the motor.

Although the embodiments and the advantages of the present disclosure have been described above, it should be understood that those skilled in the art may make various changes, substitutions, and alterations to the present disclosure without departing from the spirit and scope of the present disclosure. It should be noted that different embodiments may be arbitrarily combined as other embodiments as long as the combination conforms to the spirit of the present disclosure. In addition, the scope of the present disclosure is not limited to the processes, machines, manufacture, composition, devices, methods and steps in the specific embodiments described in the specification. Those skilled in the art may understand existing or developing processes, machines, manufacture, compositions, devices, methods and steps from some embodiments of the present disclosure. Therefore, the scope of the present disclosure includes the aforementioned processes, machines, manufacture, composition, devices, methods, and steps. Furthermore, each of the appended claims constructs an individual embodiment, and the scope of the present disclosure also includes every combination of the appended claims and embodiments.

## Claims

1. A motor comprising:
a rotor, comprising:
a rotor top surface;
a rotor bottom surface; and
a rotor bump, formed on the rotor bottom surface; and
an impeller, coupled to the rotor and located above the rotor top surface, wherein the rotor comprises at least two rotor bumps, formed on the rotor bottom surface, and the at least two rotor bumps have different shapes and/or roughnesses, and/or
wherein an outer edge of an impeller cover plate of the impeller has a non-uniform thickness.

2. The motor as claimed in claim 1,
wherein the at least two rotor bumps are symmetrically arranged about a central axis of the rotor and/or the at least two rotor bumps have different heights.

3. The motor as claimed in claim 1 or 2,
wherein the rotor further comprises a rotor core, and the rotor bump or the at least two rotor bumps and the rotor core are made of the same material.

4. The motor as claimed in claim 3,
wherein the rotor further comprises a rotor housing, and the rotor housing and the rotor core are made of different materials.

5. The motor as claimed in any of claims 1 to 4,
wherein the impeller comprises an impeller cover plate, and the periphery of the impeller cover plate has at least one recessed portion or a protruding portion.

6. The motor as claimed in claim 5,
wherein the impeller cover plate is an impeller top cover or an impeller bottom plate.

7. The motor as claimed in any of claims 1 to 6,
wherein an impeller periphery of the impeller is composed of a first outer edge and a second outer edge of different thicknesses.

8. The motor as claimed in any of claims 1 to 7,
wherein the rotor bump or the at least two rotor bumps is/are integrally formed with the rotor core.

9. A method for manufacturing a motor, comprising:
forming a first rotor bump on a rotor bottom surface of a rotor;
coupling an impeller to the rotor; and
forming a second rotor bump on the rotor bottom surface of the rotor,
wherein the first rotor bump and the second rotor bump have different shapes.

10. The motor manufacturing method as claimed in claim 9, further comprising:
forming a first part and a second part on an outer edge of an impeller cover plate of an impeller.

11. The motor manufacturing method as claimed in claim 9 or 10, further comprising:
forming a rotor housing by plastic injection molding on a rotor core of the rotor,
wherein the rotor housing and the rotor core are made of different materials.

12. The motor manufacturing method as claimed in any of claims 9 to 11, wherein the first rotor bump and the second rotor bump extend away from the
rotor bottom surface.

13. The motor manufacturing method as claimed in any of claims 9 to 12, wherein the first rotor bump, the second rotor bump and a rotor core of the rotor
are made of the same material.

14. The motor manufacturing method as claimed in any of claims 9 to 13, wherein the impeller cover plate is an impeller top cover or an impeller bottom
plate.
